# EUROPÄISCHE PATENTSCHRIFT

(11) **EP 2 241 366 B1**
(45) Veröffentlichungstag und Bekanntmachung des Hinweises auf die Patenterteilung: **22.06.2016**
(21) Anmeldenummer: 10173412.7
(22) Anmeldetag: 23.06.2006
(51) Int. Cl.: B01D 45/16, B01D 46/00, B01D 46/52

(54) **Filtergehäuse**
Filter housing
Boitier pour filtre

(30) Priorität: 02.07.2005 DE 102005031058
(43) Veröffentlichungstag der Anmeldung: 20.10.2010
(62) Teilanmeldung aus: 06761690.4
(73) Patentinhaber: Mahle International GmbH, 70376 Stuttgart (DE)
(72) Erfinder: Waibel, Hans, 71686, Remseck Aldingen (DE)
(74) Vertreter: BRP Renaud & Partner mbB Rechtsanwälte Patentanwälte Steuerberater

(56) Entgegenhaltungen:
- WO-A2-03/084641
- FR-A1- 2 426 499

## Beschreibung

Die Erfindung ein betrifft ein teilbares Filtergehäuse zur Aufnahme eines Filterelementes, bei dem das Filterelement einen zylindrisch geformten, porösen, in Richtung der Zylinderachse durchströmbaren Filtermaterialkern umfasst sowie einen, den Filtermaterialkern radial einenends dicht umschließenden Rahmen mit Dicht- und Haltemitteln, über die das Filterelement dicht in ein Filtergehäuse einsetzbar ist.

Der Filtermaterialkern kann beispielsweise aus einem Filtermedium bestehen, wie es aus EP 0 900 118 B1 und WO 02/20135 A2 bekannt ist. Die Fluidströmung erfolgt bei einem solchen wabenartig aufgebauten Filterelement in der Weise, dass rohrförmige Strömungskanäle, in die das zu filternde Fluid an einem Ende einströmt, jeweils an dem anderen Ende verschlossen sind, damit das Fluid durch die Umfangswände dieser Kanäle in benachbarte Kanäle einströmen kann, deren umgekehrtes Ende jeweils verschlossen ist.

Ein Filterelement aus einem derartigen Filtermedium, das heißt mit einem derartigen Filtermaterialkern, ist bei der aus EP 0 900 118 B1, Fig. 13 bekannten Ausführung mit einem Rahmen versehen. Dieser Rahmen ist einerseits dicht und fest mit dem Filtermaterialkern verbunden und andererseits mit Halte- und Dichtmitteln versehen, um in einer Trennebene eines teilbaren Filtergehäuses zwischen axial angreifenden Widerlagern der in der Teilungsebene zu schließenden Filtergehäuseteile dicht aufgenommen und axial fixiert werden zu können.

Aus der WO 03/084641 A2 ist ein weiteres gattungsgemäßes Filterelement bekannt.

Aus der FR 2 426 499 ist ein teilbares Filtergehäuse einer Filtereinrichtung zur Aufnahme eines Filterelementes bekannt, wobei ein Rahmen zur Aufnahme des Filterelements vorgesehen ist.

Die Erfindung beschäftigt sich mit dem Problem, ein Filtergehäuse zu schaffen, das insbesondere eine Verwendung als Motor-Ansaugluftfilter in Fahrzeugen, insbesondere Nutzfahrzeugen, ermöglicht, die für einen Einsatz in einer äußerst staubhaltigen Atmosphäre geeignet sein müssen.

Gelöst wird der erfindungsgemäße Problemkomplex bereits in erster Linie durch die Ausbildung eines gattungsgemäßen Filterelementes nach den kennzeichnenden Merkmalen des Patentanspruchs 1.

Vorteilhafte und zweckmäßige Ausgestaltungen eines solchen Filterelementes sowie eines zu dessen Aufnahme geeigneten Filtergehäuses sind Gegenstand der Unteransprüche.

Die im einzelnen mit der Erfindung erzielbaren Vorteile werden nachstehend an gezeichneten Ausführungsbeispielen erläutert.

In der Zeichnung zeigen
- Fig. 1: eine Explosionsdarstellung eines Filtergehäuses mit einem austauschbaren Filterelement,
- Fig. 2: einen Ausschnitt aus dem einströmseitigen Ende des Filterelementes nach Fig. 1 in einem Längsschnitt in perspektivischer Darstellung,
- Fig. 3: einen Längsschnitt durch das einströmseitige Ende des Filtergehäuses nach Fig. 1 mit eingesetztem Filterelement in perspektivischer Darstellung,
- Fig. 4: einen Schnitt durch das einströmseitige Ende eines Filterelementes bei einer alternativen Rahmenausbildung in perspektivischer Darstellung,
- Fig. 5: einen Schnitt durch das abströmseitige Ende des Filtergehäuses nach Fig. 1 mit einem darin eingesetzten Sicherheitsfilterelement,
- Fig. 6: eine perspektivische Ansicht des Sicherheitsfilterelementes nach Fig. 5 mit einer Sicht auf die Anströmseite,
- Fig. 7: einen Ausschnitt aus dem Bereich einer Einfüllöffnung in eine erste Ringnut des Filterelemente-Rahmens.

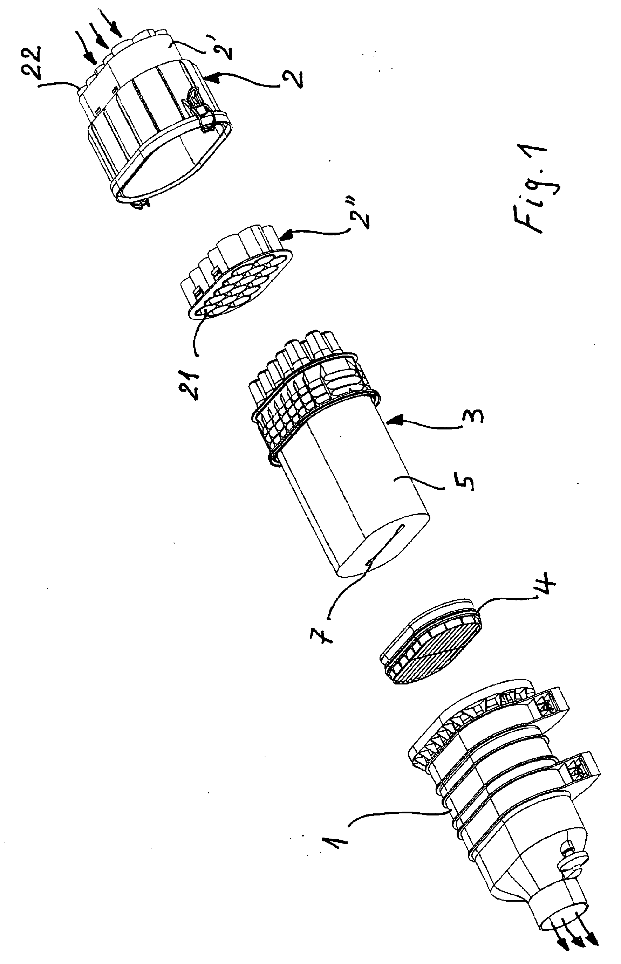

Das in Fig. 1 in Explosionsdarstellung gezeigte Filter stellt ein Motor-Ansaugluftfilter eines Nutzfahrzeuges dar. Bei dem Nutzfahrzeug, bei dem ein solches Filter eingesetzt wird, handelt es sich um ein solches, das geeignet sein muss, in äußerst staubhaltiger Atmosphäre eingesetzt werden zu können.

Das Filtergehäuse besteht aus einem ersten und einem zweiten Gehäuseteil 1, 2. Dabei stellt das erste Gehäuseteil 1 den Gehäusemantel und das zweite Gehäuseteil 2 den Gehäusedeckel des Filters dar. Die Durchströmung des Filters erfolgt entsprechend den in Fig. 1 eingetragenen Strömungspfeilen, das heißt die zu filternde Luft tritt durch den Gehäusedeckel 2 ein und verlässt das Filtergehäuse 1, 2 durch den Gehäusemantel. Auf dem Weg durch das Filtergehäuse durchströmt die Luft als Filtermedium ein Filterelement 3 axial und verlässt sodann nach ebenfalls einem axialen Durchströmen eines nachgeschalteten Filter-Sicherheitseinsatzes 4 den Gehäusemantel des ersten Filtergehäuseteiles 1.

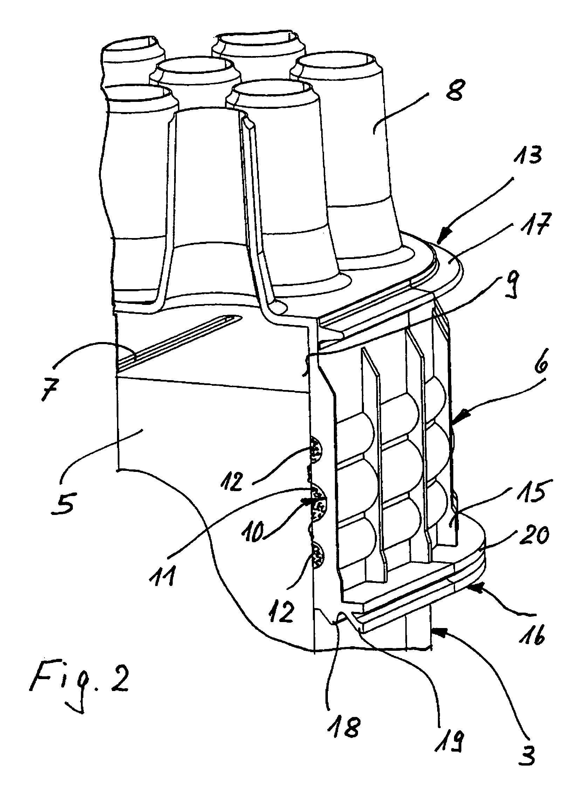

Das Filterelement 3 umfasst einen zylindrischen Filtermaterial-Kern 5 sowie einen diesen einenends umschließenden Rahmen 6. Die Lagerung des Filtermaterialkerns 5 des Filterelementes 3 in dem an dessen Anströmende angebrachten Rahmen 6 wird nachstehend mit Bezug auf zunächst die Fig. 2 näher erläutert.

Bei dem Filtermaterialkern 5 handelt es sich um ein aus den eingangs genannten Dokumenten EP 0 900 118 B1 und WO 02/20135 A2 bekanntes Filtermedium. Ein solcher Filtermaterialkern 5 wird durch Aufwickeln einer doppelwandigen Filterbahn um eine zentrale Kernleiste 7 erzeugt, weshalb ein solches Filterelement 3 auch als Wickelfilterelement bezeichnet wird. Durch die spiralförmig aufgewickelte doppelwandige Filterbahn entstehen die in der Beschreibungseinleitung beschriebenen, axialen Strömungskanäle für das Filtermedium.

Die doppelwandigen Filterbahnen besitzen jeweils eine glatt durchgehende Außenwand. Die Ausrichtung der gewickelten Filterbahn ist derart, dass radial außen an dem Filterelement 3 die durchgehend glatte Filterbahnaußenwand zu liegen kommt.

Der Rahmen 6 ist bei der in Fig. 2 gezeigten Ausführung topfförmig gestaltet. Der Topfboden enthält eine Vielzahl an rohrförmigen Zuführstutzen 8 für in das Filterelement 3 axial einzuführendes Filtermedium, das heißt hier speziell zu reinigende, staubhaltige Luft.

Der Randbereich des topfförmigen Rahmens 6 dient zur dichten Aufnahme des Filterkernmaterials 5. Der Mantelbereich des Rahmens 6 besitzt innen eine zylindrische Innenwand 9, in die der Filtermaterialkern 5 in seiner gewickelten Form eingeschoben werden kann. Zur Sicherung in der eingeschobenen Position sowie zur Erzielung einer Dichtung zwischen der Außenwand des Filtermaterialkerns 5 und der Innenwand 9 des Rahmens wird folgende Dichtungs- und Befestigungsmaßnahme ergriffen.

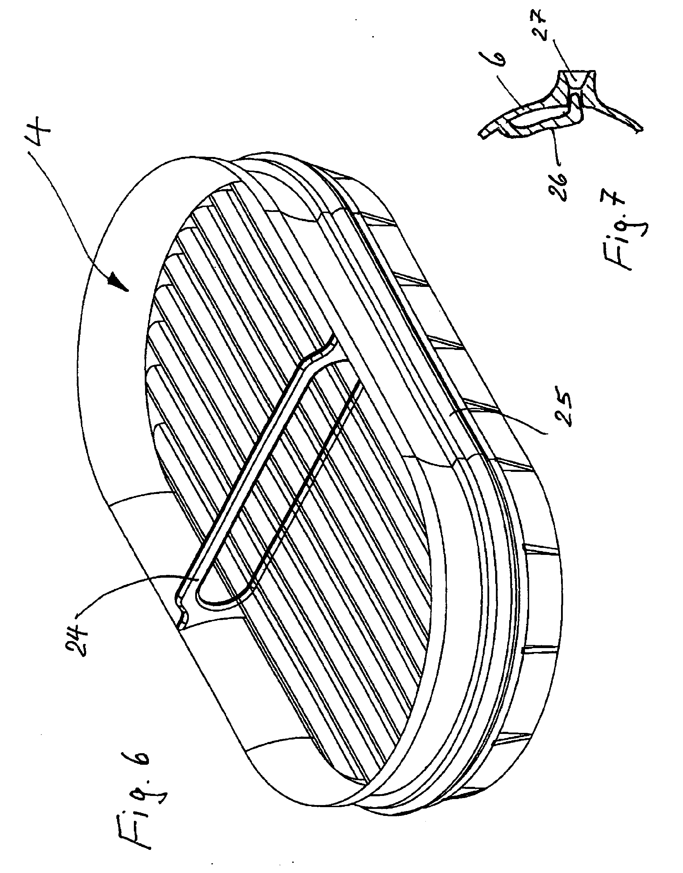

In der Innenwand 9 des Rahmens 6 ist eine nach radial innen offene, erste Ringnut 10 vorgesehen. Nach radial außen führt aus dieser ersten Ringnut 10 eine radiale Einfüllöffnung 27. Diese radiale Öffnung dient dazu, die Ringnut 10 von außen mit einem innerhalb der Ringnut 10 aufschäumbaren Füllmaterial 11 zu befüllen. Die radiale Einfüllöffnung 27 kann mit einem Rückschlagventil 26 versehen sein (Fig. 7), damit das eingefüllte Füllmaterial in der sich nach außen automatisch, das heißt unter dem Druck des aufschäumenden Füllmaterials, verschließenden Ringnut 10 - diese vollständig ausfüllend - aufschäumen kann.

Um ein vollständiges Ausfüllen der Ringnut 10 und gleichzeitig ein gewisses Eindringen in die Oberfläche der Außenwand des Filtermaterialkernes 5 sicherzustellen, sind axial benachbart zu der ersten Ringnut 10 jeweils eine zweite Ringnut 12 vorgesehen. Der Querschnitt dieser zweiten Ringnuten 12 ist zweckmäßigerweise kleiner als derjenige der ersten Ringnut 10. Durch das Vorsehen zu der ersten Ringnut 10 benachbarter zweiter Ringnuten 12 kann die erste Ringnut 10 mit in aufgeschäumtem Zustand Materialüberschuss versorgt werden, da dieser Materialüberschuss in die benachbarten zweiten Ringnuten 12 unter einer sicheren Benetzung der Außenwand des Filtermaterialkernes 5 abströmen kann. Die zweiten Ringnuten 12 dienen in erster Linie lediglich zur Aufnahme aus der ersten Ringnut 10 austretenden Überschussmateriales und müssen und sollen von Füllmaterial 10 nicht vollständig ausgefüllt sein.

Der Rahmen 6 ist aus stabilem, im wesentlichen starrem Material und soll unter anderem, als Griff für ein Herausziehen des Filterelementes 3 aus dem ersten Filtergehäuseteil 1 bei einem Filterelementewechsel dienen. Als Ausziehhilfe kann der Rahmen 6 an seinem axial freien Ende mit einem Ringbund 13 versehen sein, der in dieser Form die Funktion eines Demontagegriffes besitzt. Dies bedeutet, dass das Filterelement 3 an einem solchen Ringbund 13 als Demontagegriff leicht von Hand aus dem ersten Filtergehäuseteil 1 bei einem Filterelementewechsel herausgezogen werden kann. Der Ringbund 13 kann Träger einer zweiten Dichtung 17 des Filterelementes 3 sein.

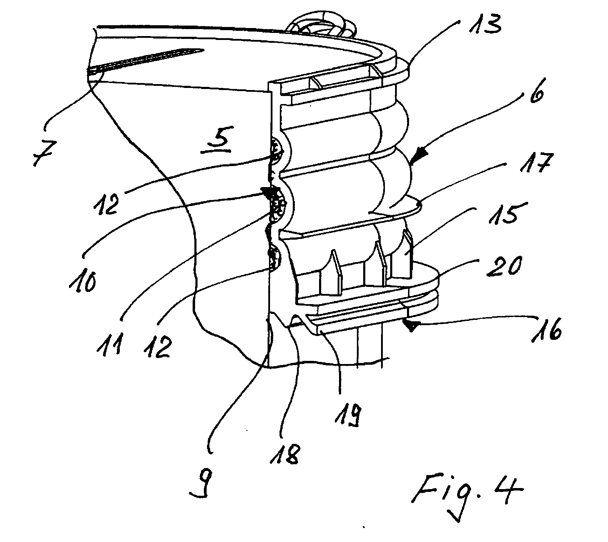

Die Ausführung nach Fig. 4 unterscheidet sich im wesentlichen von derjenigen nach Fig. 2 lediglich dadurch, dass der Rahmen 6 dort keinen Boden mit eingeformten Zuführstutzen 8 besitzt. Des weiteren ist bei der Ausführung nach Fig. 4 die zweite Dichtung 17 gegenüber dem Ringbund 13 beabstandet ausgebildet.

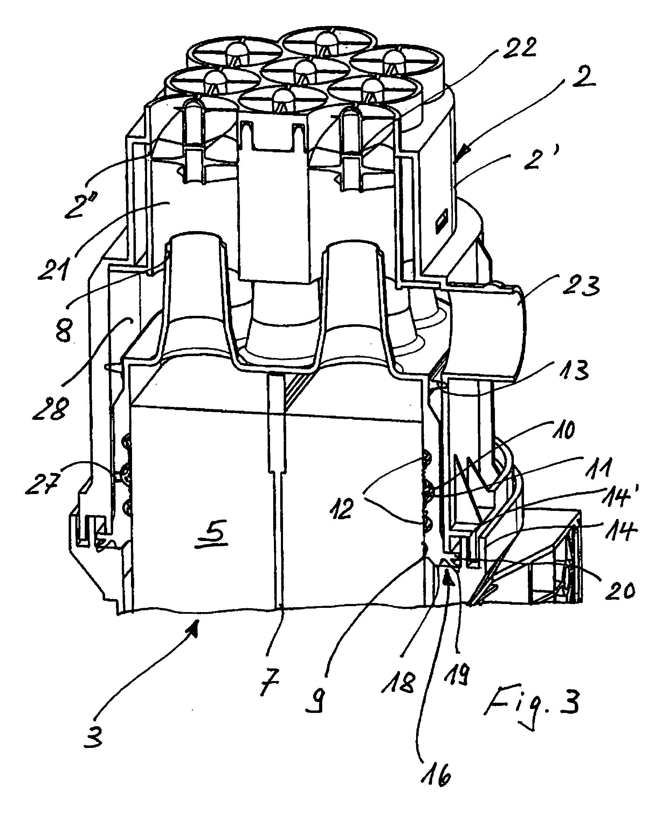

Nachstehend wird die Lagerung und Dichtung des Filterelementes 3 über dessen Rahmen 6 in dem Filtergehäuse 1, 2 mit Bezug auf die Darstellung in Fig. 3 beschrieben.

In zusammengesetztem Zustand, das heißt bei einem geschlossenen Filtergehäuse 1, 2, greifen die beiden Filtergehäuseteile 1 und 2 axial über an deren Enden jeweils U-förmig ausgebildete Gehäuseringstege 14 und 15 ineinander. Die Filtergehäuseteile 1, 2 sind hierdurch radial zentriert.

Radial gegenüber dem Filtergehäuse 1, 2, das heißt speziell gegenüber dem zweiten Filtergehäuseteil 2 zentriert ist das Filterelement 3 über auf dem Außenmantel des Rahmens 6 angeformte Passstege 15, die als solche besser in Fig. 4 erkennbar sind.

Zur Dichtung zwischen Atmosphäre außerhalb des Filtergehäuses 1, 2 und dem Reinraum des Filterelementes 3 dienen an dem Rahmen 6 des Filterelementes 3 vorgesehene, vorzugsweise angespritzte, elastische Dichtungen nämlich eine erste Dichtung 16 mit einer Dichtwirkung gegenüber dem ersten Filtergehäuseteil 1 und eine zweite Dichtung 17 mit einer Dichtwirkung gegenüber dem zweiten Filtergehäuseteil 2.

Die erste Dichtung 16 ist an der abströmseitigen Stirnfläche des Rahmens 6 angebracht. Dabei weist die ringförmige erste Dichtung 16 einen radial inneren Bereich 18 und einen radial äußeren Bereich 19 auf. Der radial innere Bereich 18 der ersten Dichtung 16 liegt formschlüssig an der Stirnfläche des Rahmens 6 an. Dieser radial innere Bereich 18 dient als Widerlager des Rahmens 6 gegenüber einem gehäuseseitigem Widerlager in dem ersten Gehäuseteil 1. Als Widerlager gegenüber einem gehäuseseitigen Widerlager innerhalb des zweiten Gehäuseteiles 2 dient ein radial von dem Rahmen 6 abstehender Ringsteg 20, der im abströmseitigen Stirnbereich des Rahmens 6 liegt. Bei geschlossenem Filtergehäuse 1, 2 ist das Filterelement 3 über den Rahmen 6 und dort praktisch über den Ringsteg 20 zwischen den beiden Gehäuseteilen 1 und 2 axial fest eingespannt. Da eines der dem Filtergehäuse 1, 2 zugewandten Widerlager des Rahmens 6 im Bereich des Ringsteges 20 durch elastisches Dichtmaterial der ersten Dichtung 16 überdeckt ist, liegt eine entsprechend elastische, axiale Verspannung des Ringfilterelementes 3 über dessen Rahmen 6 innerhalb des Filtergehäuses 1, 2 vor. Die GehäuseRingstege 14, 14' sind derart ausgebildet, das heißt aufeinander abgestimmt, dass diese bei geschlossenem Filtergehäuse 1, 2 nicht axial aneinander anliegen, wodurch eine Doppelpassung in axialer Richtung mit Bezug auf die Lagerung des Rahmens 6 über dessen Ringsteg 20 vermieden wird.

In dem radial äußeren Bereich 19 ragt die erste Dichtung 16 in einem spitzen Winkel von der zugeordneten Stirnfläche des Ringsteges 20 in Durchströmrichtung des Filters ab. In diesem Bereich ist die erste Dichtung 16 elastisch verformbar und derart vorgespannt, dass sie bei geschlossenem Filtergehäuse gegenüber einem zugeordneten Widerlager des ersten Gehäuseteils 1 insbesondere axiale Dichtwirkung ausübt. Hierdurch ist eine besonders sichere Abdichtung zwischen dem ersten Gehäuseteil 1 und dem Rahmen 6 gegeben. Hierbei kann vorgesehen sein, dass in dem Filtergehäuse 1,2 zur axialen Lagerung des Filterelementes 3 lediglich Widerlager vorgesehen sind, zwischen denen das Filterelement 3 über dessen Ringsteg 20 einspannbar ist.

Die zweite Dichtung 17 ist eine Radialdichtung, die insbesondere fest mit dem Rahmen 6 verbunden ist und für eine Dichtung zwischen dem Rahmen 6 und dem zweiten Gehäuseteil 2 dient.

Während die zweite Dichtung 17 bei der Ausführung nach Fig. 3 direkt an dem anströmseitigen Ende des Filterelementes 3 liegt, ist sie bei der Ausführung nach Fig. 4 axial relativ eng benachbart zu dem Ringsteg 20 des Rahmens 6, an dem dieser axial innerhalb des Filtergehäuses 1, 2 fixiert ist, angebracht. Funktionell wirken diese zweiten Dichtungen 17 unabhängig von ihrer axialen Anordnung an dem Rahmen völlig gleich.

Bei der Ausführung des zweiten Gehäuseteiles 2 nach der Fig. 3 sind in dessen anströmseitigem Bereich Drallerzeugungskanäle 21 in einer Vielzahl vorgesehen. Drallerzeugend wirken diese Kanäle deshalb, weil in ihnen anströmseitig in an sich bekannter Weise Drallerzeuger 22 vorgesehen sind. In die Drallerzeugungskanäle 21 ragen bei geschlossenem Filtergehäuse die im Boden des Rahmens 6 bei dessen Ausführung nach Fig. 3 vorgesehenen Zuführstutzen 8 derart hinein, dass insgesamt je Drallerzeugungskanal 21 ein Abscheidezyklon entsteht. In diesen Zyklonen werden durch die Drallwirkung Schmutzpartikel nach radial außen gedrängt, wodurch sie sich in Ringräume zwischen den Zuführstutzen 8 und den Drallerzeugungskanälen 21 zu einer dortigen Ablagerung bewegen. Aus den vorgenannten Ringräumen können die dort abgeschiedenen Schmutzpartikel in einen Schmutzsammelraum 28 zwischen den Außenwänden der Zuführstutzen 8 und der Gehäusewand des zweiten Filtergehäuseteiles 2 abströmen. Durch eine verschließbare Öffnung 23 in dem zweiten Filtergehäuseteil 2 kann in dem Schmutzsammelraum 28 abgelagerter, partikelförmiger Schmutz abgesaugt werden. Die einzelnen vorstehend beschriebenen Zyklone bewirken damit insgesamt eine Schmutz-Vorabscheidung.

Generell kann vorgesehen sein, dass das zur Aufnahme des Rahmens 6 dienende zweite Filtergehäuseteil 2 an seinem den Zuführstutzen 8 des Filterelementes-Rahmens 6 zugeordneten Ende mit den Zuführstutzen 8 zugeordneten strömungsdrallerzeugenden Einlasskanälen 21 versehen ist, wobei diese Einlasskanäle 21 mit den jeweils zylindrischen Zuführstutzen 8 des Filterelementes 3 Abscheidezyklone in einer der Anzahl der Zuführstutzen 8 entsprechenden Anzahl bilden.

Eine erfindungsgemäße Ausgestaltung eines solchen Vorabscheiders durch eine Integration eines Teils der einzelnen Zyklone in den Boden des Rahmens 6 eines Filterelementes 3 hat den großen Vorteil, dass bei einem Filterelementeaustausch, bei dem das Filtergehäuse geöffnet wird, automatisch der Schmutzsammelraum 28 innerhalb des zweiten Gehäuseteils 2 geöffnet wird. Hierdurch können dort angesammelte Schmutzpartikel von selbst abfallen, ohne hierfür eine Absaugeeinrichtung benutzen zu müssen.

Bei der in Fig. 1 und 3 dargestellten Ausführung des zweiten Filtergehäuseteiles 2 setzt sich dieses aus zwei getrennt hergestellten Teilelementen zusammen, nämlich einer Außenwand 2' des zweiten Filtergehäuseteiles 2 als erstem Teilelement und einem das zweite Teilelement bildenden Einsatzteil 2". Die Drallerzeuger 22 setzen sich aus Teilelementen zusammen, die aufgeteilt sind auf einerseits die Außenwand 2' und andererseits das Einsatzteil 2" . Durch eine solche Aufteilung in Teilelemente 2', 2" , die erst nach einer getrennten Herstellung bei der Filtermontage durch beispielsweise ein gegenseitiges Verrasten miteinander verbunden werden müssen, sind diese Drallerzeuger 22 fertigungstechnisch rationell herstellbar. Es kann eine Vielzahl an parallel durchströmbarer Drallerzeuger 22 durch lediglich ein Kunststoffspritzgießen von zwei Einzelbauteilen 2', 2" hergestellt werden.

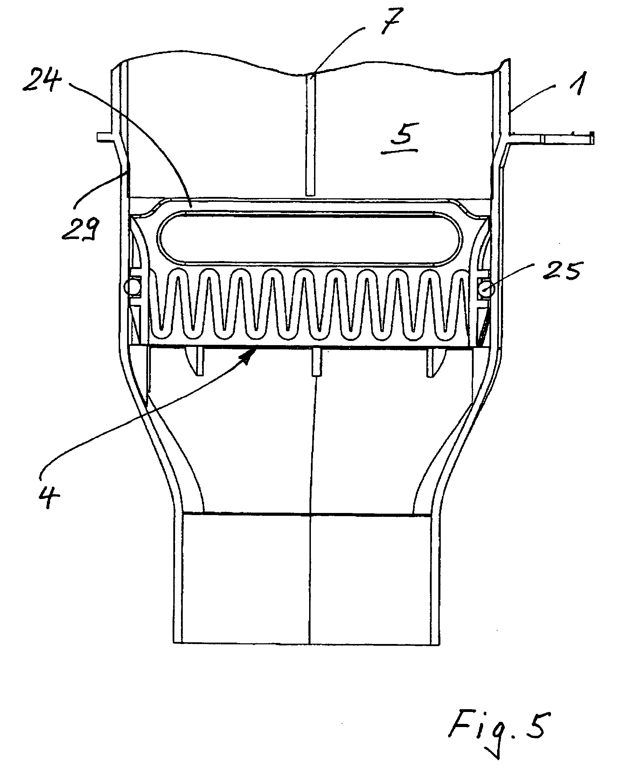

Abströmseitig ist in dem ersten Filtergehäuse 1 ein Filtersicherheitseinsatz 4 entsprechend den Darstellungen in den Fig. 5 und 6 vorgesehen. Anströmseitig ist dieser Sicherheitsfiltereinsatz 4 mit einem Entnahmegriff 24 versehen. Radial außen ist eine Moosgummidichtung 25 zur Dichtung gegenüber dem ersten Filtergehäuseteil 1 vorgesehen.

An dem abströmseitigen Ende ist das Filterelement 3 radial durch direkte Anlage an einem entsprechend ausgebildeten, das heißt radial nach innen eingezogenen, Abschnitt 29 des ersten Filtergehäuseteiles zentriert (Fig. 6).

Fig. 7 zeigt eine mögliche Ausführung eines Rückschlagventiles 26 in einer ersten Ringnut 10. Bei dieser Ausführung eines Rückschlagventiles 26 ist bei einer Kunststoffausführung des Rahmens 6 in diesem eine rückschlagwirkende Federzunge einformt.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Teilbares Filtergehäuse (1, 2) zur Aufnahme eines Filterelementes (3), wobei
- das Filtergehäuse (1,2) aus einem ersten (1) und einemzweiten Gehäuseteil (2) besteht,
- die zu filternde Luft durch den zweiten Gehäuseteil (2) in das Filtergehäuse axial eintritt und das Filtergehäuse durch den ersten Gehäuseteil (1) axial verlässt,
- strömungsdrallerzeugende Einlasskanäle (21) axial in dem anströmseitigen Bereich des zweiten Gehäuseteils (2) vorgesehen sind,
- ein Rahmen (6) zur Aufnahme des Filterelements (3) vorgesehen ist, der anströmseitig Zuführstutzen (8) aufweist,
- jedem Zuführstutzen (8) im zweiten Gehäuseteil (2) ein strömungsdrallerzeugender Einlasskanal (21) vorgeschaltet ist,
- jeder Zuführstutzen (8) in den zugehörigen strömungsdrallerzeugenden Einlasskanal (21) derart hineinragt, dass je strömungsdrallerzeugendem Einlasskanal (21) mit zugehörigem Zuführstutzen (8) ein Abscheidezyklone entsteht,
**dadurch gekennzeichnet,**
- **dass** das zweite Filtergehäuseteil (2) aus zwei getrennt hergestellten Teilelementen zusammengesetzt ist, nämlich einer Außenwand (2') des zweiten Filtergehäuseteiles (2) als erstem Teilelement und einem das zweite Teilelement bildenden Einsatzteil (2"), das in das erste Teilelement eingesetzt ist,
- **dass** die strömungsdrallerzeugenden Einlasskanäle (21) aus zwei Teilelementen zusammengesetzt sind, einerseits der Außenwand (2') und andererseits dem Einsatzteil (2").

2. Filtergehäuse nach Anspruch 1,
**dadurch gekennzeichnet,**
**dass** in dem Filtergehäuse (1, 2) zur axialen Lagerung des Filterelementes (3) lediglich Widerlager vorgesehen sind, zwischen denen das Filterelement (3) über einen Ringsteg (13) desselben einspannbar ist.

3. Filtergehäuse nach Anspruch 1 oder 2,
**dadurch gekennzeichnet,**
**dass** bei einem geschlossenen Filtergehäuse (1,2), beide Filtergehäuseteile (1,2) axial über an deren Enden jeweils U-förmig ausgebildete Gehäuseringstege (14) und (15) ineinandergreifen und sind hierdurch radial zentriert.

4. Filtergehäuse nach einem der Ansprüche 1 bis 3,
**dadurch gekennzeichnet,**
**dass** ein Schmutzsammelraum (28) vorgesehen ist.

5. Filtergehäuse nach Anspruch 4,
**dadurch gekennzeichnet,**
**dass** in dem zweiten Filtergehäuseteil (2) eine verschließbare Öffnung (23) vorgesehen ist, über die in dem Schmutzsammelraum (28) abgelagerter, partikelförmiger Schmutz abgesaugt werden kann.

6. Filtergehäuse (1,2) nach einem der vorhergehenden Ansprüche mit einem Filterelement (3) zum Filtern der Motor-Ansaugluft in einem Kraftfahrzeug, insbesondere Nutzfahrzeug.

## Claims

1. Divisible filter housing (1,2) for accepting a filter element (3), wherein
- the filter housing (1,2) is comprised of a first (1) and a second (2) housing part,
- the air to be filtered enters the filter housing axially through the second housing part (2) and exits the filter housing axially through the first part of the housing (1),
- inlet channels creating a swirling flow (21) are provided axially in the region of the inlet flow of the second housing part (2),
- a frame (6) is provided into which the filter element (3) can be inserted, which has directional guide intakes (8) on the air inlet side,
- each directional guide intake (8) in the second part of the housing (2) has an inlet channel creating a swirling flow (21) preceding it upstream,
- each directional guide inlet (8) projects into the accompanying inlet channel creating a swirling flow (21) to such an extent that for each inlet channel creating a swirling flow (21) with accompanying directional guide intake (8) a separating cyclone arises,
**characterised in that**
- the second filter housing part (2) is comprised of two partial elements manufactured separately, namely an outer wall (2') of the second filter housing part (2) as the first partial element and an insert part (2") comprising the second partial element, which is inserted into the first partial element,
- the inlet channels creating a swirling flow (21) are comprised of two partial elements, on the one hand the external wall (2') and on the other hand the insert piece (2").

2. Filter housing according to claim 1, **characterised in that** in the filter housing (1,2) for the axial insertion of the filter element (3) merely abutments are provided, between which the filter element (3) can be clamped via the ring web (13) on them.

3. Filter housing according to claim 1 or 2, **characterised in that** with a closed filter housing (1,2) both parts of the filter housing (1,2) interlock axially with one another via the U-shaped housing ring web (14) and (15) formed at the end of them in each case and are radially centred in this way.

4. Filter housing according to one of the claims 1 to 3, **characterised in that** a dirt particle collection chamber (28) is provided.

5. Filter housing according to claim 4, **characterised in that** in the second part of the filter housing (2) a closable opening (23) has been provided, through which particles of dirt deposited in the dirt particle collection chamber (28) can be sucked out.

6. Filter housing (1,2) according to one of the aforementioned claims, with a filter element (3) to filter the engine air intake in a motor vehicle, in particular in commercial vehicles.

## Revendications

1. Boîtier de filtre (1, 2) pouvant être divisé servant à recevoir un élément filtrant (3), où
- le boîtier de filtre (1, 2) est constitué d'une première partie de boîtier (1) et d'une seconde partie de boîtier (2),
- l'air à filtrer entre de manière axiale à travers la seconde partie de boîtier (2) dans le boîtier de filtre et quitte de manière axiale le boîtier de filtre par la première partie de boîtier (1),
- des canaux d'entrée (21) produisant des tourbillons liés à l'écoulement sont prévus de manière axiale dans la zone côté flux entrant de la seconde partie de boîtier (2),
- un cadre (6) est prévu afin de recevoir l'élément filtrant (3), lequel présente, du côté du flux entrant, des tubulures d'arrivée (8),
- un canal d'entrée (21) produisant des tourbillons liés à l'écoulement est monté en amont de chaque tubulure d'arrivée (8) dans la seconde partie de boîtier (2),
- chaque tubulure d'arrivée (8) dépasse à l'intérieur du canal d'entrée (21) associé produisant des tourbillons liés à l'écoulement de manière à former un cyclone séparateur par canal d'entrée (21) produisant des tourbillons liés à l'écoulement pourvu d'une tubulure d'arrivée (8) associée,
**caractérisé en ce**
- **que** la seconde partie de boîtier (2) est composée de deux éléments partiels fabriqués séparément, à savoir d'une paroi extérieure (2') de la seconde partie de boîtier (2) en tant que premier élément partiel et d'une partie d'insertion (2") formant le second élément partiel, laquelle est insérée dans le premier élément partiel,
- en ce que les canaux d'entrée (21) produisant des tourbillons liés à l'écoulement sont composés de deux éléments partiels, d'une part de la paroi extérieure (2') et d'autre part de la partie d'insertion (2").

2. Boîtier de filtre selon la revendication 1,
**caractérisé en ce**
**que** sont prévues, dans le boîtier de filtre (1, 2), aux fins du support axial de l'élément filtrant (3), seulement des butées, entre lesquelles l'élément filtrant (3) peut être enserré par l'intermédiaire d'une nervure annulaire (13) de ce dernier.

3. Boîtier de filtre selon la revendication 1 ou 2,
**caractérisé en ce**
**que** lorsque le boîtier de filtre (1, 2) est fermé, deux parties de boîtier de filtre (1, 2) s'engrènent l'une dans l'autre de manière axiale par l'intermédiaire de nervures annulaires de boîtier (14) et (15) réalisées au niveau des extrémités des parties de boîtier de manière à présenter respectivement une forme de U, lesdites parties de boîtier de filtre étant de ce fait centrées de manière radiale.

4. Boîtier de filtre selon l'une quelconque des revendications 1 à 3,
**caractérisé en ce**
**qu'**un espace collecteur de saletés (28) est prévu.

5. Boîtier de filtre selon la revendication 4,
**caractérisé en ce**
**qu'**est prévue, dans la seconde partie de boîtier de filtre (2), une ouverture (23) pouvant être fermée, par l'intermédiaire de laquelle les saletés sous forme de particules, déposées dans l'espace collecteur de saletés (28) peuvent être évacuées par aspiration.

6. Boîtier de filtre (1, 2) selon l'une quelconque des revendications précédentes, pourvu d'un élément filtrant (3) pour le filtrage de l'air d'aspiration du moteur dans un véhicule automobile, en particulier dans un véhicule utilitaire.
